## Europäisches Patentamt

## European Patent Office

## Office européen des brevets

(19)

(11) Veröffentlichungsnummer: **0 082 930**
**B1**

(12) **EUROPÄISCHE PATENTSCHRIFT**

(45) Veröffentlichungstag der Patentschrift:
05.02.86

(51) Int. Cl.⁴: **C 09 K 5/06**

(21) Anmeldenummer: **82109377.0**

(22) Anmeldetag: **11.10.82**

(54) **Plastisch verformbares Kältemittel.**

(30) Priorität: **05.12.81 DE 3148262**

(43) Veröffentlichungstag der Anmeldung:
**06.07.83 Patentblatt 83/27**

(45) Bekanntmachung des Hinweises auf die Patenterteilung:
**05.02.86 Patentblatt 86/6**

(84) Benannte Vertragsstaaten:
**AT BE CH FR GB IT LI NL SE**

(56) Entgegenhaltungen:
**DE - A - 3 141 191**
**US - A - 3 393 152**
**US - A - 4 011 730**

(73) Patentinhaber: **MESSER GRIESHEIM GMBH, Hanauer Landstrasse 330, D-6000 Frankfurt/Main 1 (DE)**

(72) Erfinder: **Donnerhack, Andreas, Dr., Bismarckstrasse 4, D-4150 Krefeld (DE)**
Erfinder: **Golke, Heinz, Am Kessel 48, D-4035 Breitscheid (DE)**
Erfinder: **Volker, Wolfgang, Pastorsbusch 35, D-4154 Tönisvorst 1 (DE)**

## Beschreibung

Die Erfindung betrifft ein plastisch verformbares Kältemittel.

Tiefsiedende verflüssigte Gase, insbesondere Stickstoff, werden in vielen Anwendungsbereichen zur Kühlung von Materialien oder zur Kühlung von Oberflächen von Materialien eingesetzt. Die tiefe Siedetemperatur des flüssigen Stickstoffs von -196°C hewirkt in der Regel einen guten Wärmeübergang und die hohe Verdampfungswärme des flüssigen Stickstoffs bedeutet einen großen Kältevorrat pro Volumeneinheit.

Die Oberflächen von Gegenständen, die nicht in das tiefsiedende verflüssigte Gas eingetaucht werden können, werden im der Regel durch Aufsprühen des Kältemittels abgekühlt. Hierbei ist die Ausnutzung des Kälteinhaltes von beispielsweise flüssigem Stickstoff allerdings schlecht, da die Oberflächen in den seltensten Fällen so beschaffen sind, daß der flüssige Stickstoff von allein auf der abzukühlenden Oberfläche verbleibt. Insbesondere dann, wenn die Oberflächen nicht horizontal verlaufen oder Erhebungen und Vertiefungen aufweisen, bereitet es Schwierigkeiten, eine gleichmäßige Abkühlung zu erreichen.

Diese Probleme treten beispielsweise in der Kryomedizin bei der Behandlung von Warzen auf. Hierbei werden einzelne Warzen durch Aufdrücken eines metallischen Stabes, der zuvor in flüssigem Stickstoff tiefgekühlt wurde, auf niedrige Temperaturen abgekühlt. Die niedrigen Temperaturen verursachen ein Absterben der Warzen. Diese Methode läßt sich allerdings nicht mehr anwenden, wenn größere Hautpartien behandelt werden müssen, beispielsweise wenn größere Bautpartien von Warzen befallen sind. Das Aufsprühen von flüssigem Stickstoff bringt hier nur unbefriedigende Ergebnisse.

Der Erfindung liegt die Aufgabe zugrunde, ein Kältemittel auf der Basis von flüssigem Stickstoff zu schaffen, welches es gestattet, auch unregelmäßig verlaufende Oberflächen problemlos abzukühlen.

Gemäß der Erfindung wird dies durch ein plastisch verformbares Kältemittel,bestehend aus einem Gemisch von flüssigem Stickstoff mit mindestens 8 Gew.% feinkörnigem Silicagel erreicht.

In einem derartigen Kältemittel ist der Stickstoff in flüssiger Form gespeichert. Das Kältemittel hat die Koneistenz von Matsch und kann bis zu etwa 50 Gew.% Silicagel enthalten. Bei höheren Gehalten an Silicagel ist die Kältewirkung unbefriedigend. Als besonders geeignet hat sich ein unter der geschützten Bezeichnung 'Aerosil 200' bekanntes Silicagel erwiesen. Aerosil 200 besteht zu über 99,8 % aus $SiO_2$, die Teilchengröße beträgt 12 nm, die spezifische Oberfläche beträgt 200 m²/g und die Schüttdichte beträgt 50 g/l. Hersteller ist Degussa, Frankfurt.

Besonders vorteilhaft kann das erfindungsgemäße Kältemittel in Form eines Kältekissens verwendet werden. Hierzu wird das Kältemittel in ein feinmaschiges Gewebe aus Polyamid abgefüllt. Das Kältekissen kann beliebig oft mit flüssigem Stickstoff getränkt werden und auf beliebig geformten Oberflächen angebracht werden. Beim Eintauchen des Kissens in flüssigen Stickstoff stellt sich ohne Volumenänderung das geeignete Mischungsverhältnis ein, da lediglich die Hohlräume im Silicagel mit flüssigem Stickstoff gefüllt werden. Es ist ohne weiteres möglich, ein solches Kältekissen auch von unten an eine Oberfläche zu drücken. Bevorzugtes Anwendungsgebiet ist die Abkühlung von größeren Hautpartien in der Kryomedizin. Dies wird nachfolgend näher erläutert. Es ist aber ohne weiteres ersichtlich, daß das erfindungsgemäße Kältemittel auch in beliebigen technischen Bereichen entsprechend angewendet werden kann.

Durch die Zeichnungen wird die Erfindung näher erläutert.

Es zeigen:

Fig.1 däs Kältemittel in Form eines Kältekissens

Fig.2 anhand eines Diagramms den Vergleich der Kühlwirkung eines herkömmlichen Kupferstahes mit der Kühlwirkung eines Kältekissens in der Kryomedizin.

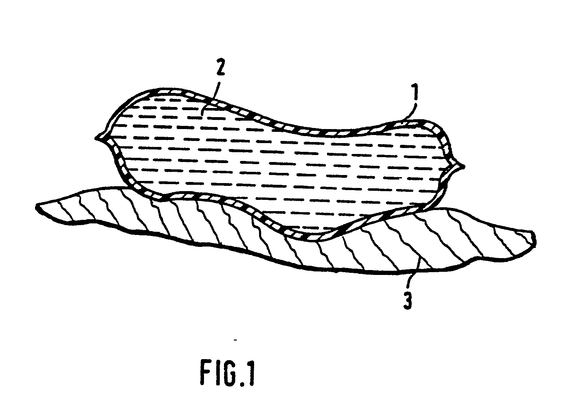

Das in Fig. 1 dargestellte Kältekissen besteht aus einem feinmaschigen Gewebe 1 aus Polyamid, in welchem sich ein Matsch 2 aus flüssigen Stickstoff mit 8 Gew.% Aerosil 208 befindet Das Kältekissen liegt auf der zu behandelnden Oberfläche, einer menschlichen Haut 3, und paßt sich den Konturen der Haut hervorragend an. Die Haut wird hierbei äußerst gleichmäßig abgekühlt. Das Gewebe 1 ist so fein maschig, daß der Matsch aus flüssigem Stickstoff und Aerosil 200 die Poren nicht durchdringen kann. Hur der verdampfte gasförmige Stickstoff kann aus dem Gewebe entweichen. Das Kältekissen steht in direktem Kontakt mit der abzukühlenden Oberfläche. Ein nennenswertes Gäspolster zwischen Kältemittel und Oberfläche, welches isolierend wirken könnte, entsteht nicht. Das Kältekissen ist wiederverwendbar, indem es nach dem Erwärmen erneut in flüssigen Stickstoff getaucht wird. Es speichert hierbei wieder die volle Menge an flüssigem Stickstoff, der dabei die Poren des Polyamidgewebes durchdringt.

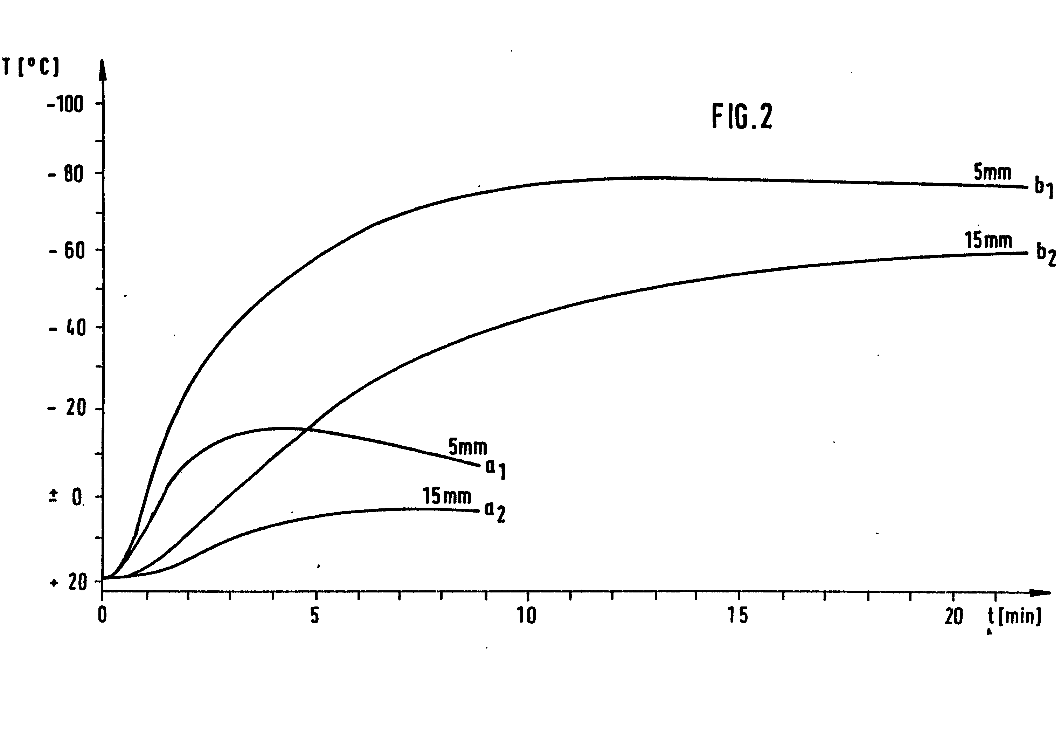

Um eine Aussage über die Gefriereigenschaften des Kältekissens treffen zu können, wurden im Vergleich mit einem herkömmlichen Kupferstab Gefrierversuche an Silikongummi durchgeführt. Mit Thermoelementen wurde der zeitliche Temperaturverlauf in verschiedenen Schichttiefen gemessen. Die Versuchsergebnisse sind in Fig. 2 dargestellt. Der Gefrierverlauf in 5 mm Tiefe und in 15 mm Tiefe bei Anwendung eines Kupferstabes wird durch die Kurven $a_1$ und $a_2$ wiedergegeben. In 5 mm Tiefe wurden als Temperaturminimum nach 3,5 Minuten lediglich -16°C erreicht. In 15 mm Tiefe wurde die O°C-Grenze bei weitem nicht mehr erreicht. Bei Anwendung eines erfindungsgemäßen Kältekissens wurden dagegen in 5 mm Tiefe nach 3 Minuten bereits - 35°C erreicht, nach 14 Minuten - 78°C. In 15 mm Tiefe wurden nach 3 Minuten 0°C und nach 5,5 Min - 20°C erreicht. Die entsprechenden Kurven sind in Fig. 2 durch b und b wiedergegeben.

Die besseren Ergebnisse des erfindungsgemäßen Kältekissens im Vergleich zum Kupferstab sind sicherlich nicht ohne weiteres nur auf bessere Wärmeübergangseigenschaften zurückzuführen. Beim Kupferstab geht wegen des geringen Gefrierquerschnittes viel Kälte in seitlich benachbarte Regionen verloren. Diese Bereiche werden bei der Verwendung großflächiger Kissen selbst von der Oberfläche aus mit Kälte versorgt. Der Vergleichsversuch zeigt aber, daß die Gefriertemperatur und Gefriertiefe, die mit dem Kupferstab beikleinen Flächen erzielt werden, mit dem Kältekissen auf großen Flächen erreicht und übertroffen werden.

In den Experimenten wurden auch andere plastisch verformbare Speichermaterialien untersucht, insbesondere Kupfergranulat. Auch diese Speichermaterialien erwiesen sich dem Kupferstab gegenüber als überlegen, doch konnte mit ihnen die Gefrierwirkung des erfindungsgemäßen Kältemittels aus flüssigem Stickstoff mit feinkörnigem Silicagel bei weitem nicht erreicht werden.

Das erfindungsgemäße Kältemittel kann auch in rein technischen Bereichen angewendet werden. Bei Verwendung als Kältekissen können auch anstelle von Polyamid andere Hüllmaterialien verwendet werden, z.B. Glaswolle oder Steinwolle. Kälte kissen aus derartigem Hüllmaterial können gegebenenfalls Temperaturen bis zu 1000°C ausgesetzt werden. Es ist ohne weiteres möglich, das Kältemittel, insbesondere in Form eines Kältekissens, an unebenen Flächen, Seiten- oder Unterflächen anzubringen, und einen nahezu direkten Kontakt zwischen zu kühlendem Objekt und Kältemittel herzustellen.

## Patentansprüche

1. Plastischverformbares Kältemittel, bestehend aus einem Gemisch von flüssigem Stickstoff mit mindestens 8 Gew.% bis etwa 50 Gew.% feinkörnigem Silicagel.

2. Verwendung des Kältemittels nach Anspruch 1 in Form eines mit dem Kältemittel gefüllten Kältekissens aus einem feinmaschigen Polyamidgewebe zur Kühlung von Oberflächen von Materialien, insbesondere in der Kryomedizin.

## Claims

1. Plastically deformable cooling agent, consisting of a mixture of liquid nitrogen with at least 8% until about 50% by weight of fine grained silica gel.

2. Use of refrigerant according to claim 1 in the form of a cooling cushion filled with the refrigerant consisting of a fine mesh polyamide fabric structure for colling of surfaces of materials, in particular in cryomedicine.

## Revendications

1°) Agent frigorigène déformable plastiquement, caractérisé en ce qu'il se composé d'un mélange d'azote liquide et d'au molns 8 à 50 % en poids d'un gel de silice à graîns fîns.

2°) Application de l'agent frigori- gène selon la revendication 1 sous la forme d'un coussin frigorifique rempli d'agent frigorigène en un tissu de polyamide à mailles fines pour refroidir des surfaces de matériau notamment en médecine cryogénique.

FIG.1

FIG.2